# EUROPÄISCHE PATENTSCHRIFT

(11) **EP 3 224 164 B1**
(45) Veröffentlichungstag und Bekanntmachung des Hinweises auf die Patenterteilung: **28.06.2023**
(21) Anmeldenummer: 15760128.7
(22) Anmeldetag: 31.08.2015
(51) Int. Cl.: B65G 47/68

(54) **VERFAHREN ZUR PACKGUTZUSAMMENFÜHRUNG UND PACKGUTFÖRDERVORRICHTUNG**
METHOD FOR COMBINING MATERIALS TO BE PACKAGED, AND DEVICE FOR CONVEYING MATERIALS TO BE PACKAGED
PROCÉDÉ POUR RÉUNIR DES PRODUITS À EMBALLER ET DISPOSITIF DE TRANSPORT DE PRODUITS À EMBALLER

(30) Priorität: 26.11.2014 DE 102014224147
(43) Veröffentlichungstag der Anmeldung: 04.10.2017
(73) Patentinhaber: Körber Supply Chain Logistics GmbH, 78467 Konstanz (DE)
(72) Erfinder: WIEHLER, Rolf, 78476 Allensbach (DE)
(74) Vertreter: Müller Schupfner & Partner Patent- und Rechtsanwaltspartnerschaft mbB
(86) Internationale Anmeldenummer: PCT/EP2015/069859
(87) Internationale Veröffentlichungsnummer: WO 2016/082950

(56) Entgegenhaltungen:
- EP-A1- 0 495 261
- EP-A1- 2 048 096
- WO-A1-98/17556
- WO-A1-2004/050518
- DE-A1- 3 340 088
- DE-C- 468 468
- US-A- 3 536 180
- US-A- 4 039 074
- US-A1- 2007 129 843

## Beschreibung

Die Erfindung betrifft ein Verfahren zum Zusammenführen von mehreren getrennten Packgutströmen in einen Hauptstrom, bei dem jeder der Packgutströme auf einem Zuführförderer befördert, im Bereich einer Zuführmündung des Zuführförderers mit dem Hauptstrom vereint und auf einem Hauptförderer im Hauptstrom weitertransportiert wird, wobei zumindest eine Seitenwand den Hauptstrom seitlich begrenzt.

DE 33 40 088 A1 offenbart eine Vorrichtung zum drucklosen Umformen eines angeförderten breiten Flaschenstroms in einen abzufördernden einspurigen Flaschenstrom mit einem zwischen einem Führungsgeländer aufweisenden Zuförderer und einem Führungsgeländer aufweisenden Abförderer angeordneten Zwischenförderer gemäß dem Oberbegriff des Anspruchs 10.

US4039074(A) offenbart eine Sortiervorrichtung für ungeordnet verteiltes Stückgut gemäß dem Oberbegriff des Anspruchs 10, das einen angetriebenes Förderbett mit einer Vielzahl von separaten Rollersektionen umfasst.

In großen Paketzentren, Logistikzentren oder Zentren zum Warenumschlag sowie auch bei der Gepäckbeförderung werden große Mengen von inhomogenen und ungeordnet zueinander ausgerichteten Paketen, Warengebinden, Gepäckstücken und dergleichen in Transportgutströmen befördert. Da nicht alle Transportgüter den gleichen Ursprung oder das gleiche Ziel haben, werden Transportgutströme aus unterschiedlichen Quellen in einem Hauptstrom vereint und der Hauptstrom wird später wieder getrennt zum Weitertransport zu unterschiedlichen Zielen. Da die Transportgüter individuell sein können und jedes sein eigenes Ziel haben kann sowie üblicherweise eine Verpackung aufweist, wie eine Paketverpackung, eine Warenverpackung, einen Koffer oder dergleichen, ist im Folgenden von Packgut die Rede, um es von Füllgut oder Schüttgut zu unterscheiden.

Bei der Zusammenführung von Packgutströmen kann es zu Staus kommen, bei dem ein Förderweg blockiert und nachfolgende Packgüter in den Stau hinein schieben. Die hierbei wirkenden Kräfte können zu Beschädigungen an den Packgütern führen. Ein solcher Stau kann vermieden werden, wenn die Breite des Hauptförderers mindestens so breit ist wie die Summe aller Zuführförderer, deren Packgutströme sich im Hauptstrom auf dem Hauptförderer vereinen. Hierbei würden jedoch sehr breite Hauptförderer benötigt, die hinsichtlich Platzbedarf, Kosten und auch bei der nachfolgenden Trennung des Hauptstroms in mehrere Zielströme nachteilig sein würden.

Bei flachen, in Folie verpackten Gütern, insbesondere bei einer Verpackung in Tütenform, kann es vorkommen, dass die Folienverpackung zwischen das sich bewegende Förderelement und die Seitenwand eingezogen wird, wodurch die Sendung zusammengedrückt und eventuell beschädigt wird, beispielsweise indem die Verpackung zerrissen wird.

Es ist eine Aufgabe der vorliegenden Erfindung, ein Verfahren zum Zusammenführen von mehreren getrennten Packgutströmen in einen Hauptstrom anzugeben, mit dem trotz einer Verengung der Förderbreite einem Stau entgegengewirkt werden kann.

Diese Aufgabe wird durch ein Verfahren der eingangs genannten Art gelöst, bei dem erfindungsgemäß Packgüter des Hauptstroms im Bereich zwischen zwei Zuführmündungen zweier Zuführförderer aufgrund einer Ausrichtung des Hauptförderers relativ zur Seitenwand auf diese zu und dann an dieser entlang geführt werden. Die Anordnung der Packgüter auf dem Hauptförderer kann so zur Seitenwand hin verdichtet werden, sodass auf der der Seitenwand abgewandten Seite des Hauptförderers Raum für einen weiteren hinzutretenden Packgutstrom entsteht. Die Seitenwand ist zumindest teilweise über einem Förderelement des Hauptförderers angeordnet und bildet einen Spalt zum Förderelement, der sich stromabwärts vertikal vergrößert.

Durch das Größerwerden des Spalts wird die Sendung bei ihrer Bewegung stromabwärts zwar immer noch in den Spalt gezogen. Doch da dieser sich vertikal aufweitet, kann einem Quetschen der folienverpackten Güter und damit ihrer Beschädigung entgegengewirkt werden. Insofern ist es vorteilhaft, wenn ein Packgut bei seiner Beförderung entlang der Seitenwand in einem Spalt zwischen einem Förderelement des Hauptförderers und der darüber angeordneten Seitenwand eingeklemmt und stromabwärts im Spalt gezogen wird, der Spalt sich in Richtung stromabwärts vertikal erweitert und das Packgut freigibt.

Zweckmäßigerweise werden die Packgüter des Hauptstroms auch im Bereich einer Zuführmündung eines Zuführförderers aufgrund einer Ausrichtung des Hauptförderers relativ zur Seitenwand auf diese zu und dann an dieser entlang geführt, insbesondere durchgehend von einer Zuführmündung zur stromabwärts nächstfolgenden.

Unter einem Packgut oder einem Packstück kann ein verpackter Gegenstand verstanden werden, wie ein Paket, ein Warengebinde beziehungsweise verpackte Ware, ein Gepäckstück, oder dergleichen. Im Gegensatz zu Schüttgut oder Füllgut ist ein Packgut ein einzelnes Objekt mit einer Verpackung, die einzelne oder mehrere Gegenstände umschließt. Das Packgut kann eine Post- oder Kuriersendung sein, ein quaderförmiges Objekt, ein Paket, insbesondere ein Post- oder Kurierpaket, ein Warengebinde, eine verpackte Einzelware, ein Gepäckstück und/oder dergleichen. Der Hauptstrom ist ein Strom von Packgütern, in dem Packgüter, insbesondere sämtliche Packgüter, aus mehreren Packgutströmen der Zuführförderer vereint sein können.

Die Packgutströme sind zweckmäßigerweise Bulkströme, also Ströme, in denen die einzelnen Packstücke ungeordnet zueinander transportiert werden. Hierbei kann sowohl die Ausrichtung der Packstücke zueinander als auch die Packgutdichte pro Meter unregelmäßig sein, also um mehr als den Faktor 10 schwanken. Auch eine Überdeckung der Packgüter bei seitlicher Betrachtung des Packgutstroms ist möglich und durchaus üblich. Das geförderte Packgut ist inhomogen und kann insbesondere hinsichtlich des Gewichts der einzelnen Packgüter, deren Oberflächenbeschaffenheit und in Abmessung und Form stark divergieren. Auch die Orientierung des Packguts auf den Zuführförderern ist inhomogen und die Dichte des Packgutstroms auf einem Zuführförderer, beispielsweise die Flächenbelegung Packgut pro Quadratmeter, insbesondere pro 5 Quadratmeter, kann um den Faktor 10 und mehr schwanken. Auch übereinanderliegende Packgüter können in den Packgutströmen vorhanden sein.

Der Hauptförderer und die Zuführförderer umfassen zweckmäßigerweise jeweils ein oder mehrere Fördereinheiten, die jeweils ein Förderelement aufweisen, das von einem Förderantrieb in Förderrichtung bewegt werden kann. Das Packgut liegt auf den Förderelementen und wird durch diese in die entsprechende Förderrichtung, also beispielsweise in die Zuführrichtung auf dem Zuführförderer beziehungsweise die Hauptförderrichtung auf dem Hauptförderer, bewegt. Die Förderbreite des Hauptförderers ist vorteilhafterweise schmaler als die Summe der Förderbreiten der Zuführförderer, zweckmäßigerweise zumindest 30% schmaler, insbesondere zumindest 45% schmaler. Förderbreite des Hauptförderers ist hierbei zweckmäßigerweise an seiner schmalsten Stelle zu sehen. Die Förderbreiten können hierbei die Breiten sein, die der betreffende Packgutstrom bzw. der Hauptstrom maximal einnehmen kann.

Die Förderrichtungen beziehen sich auf die Förderbewegung der Förderelemente, wobei sich die Packgüter auch etwas abweichend von der entsprechenden Förderrichtung bewegen können, beispielsweise durch ein Anstoßen aneinander, ein Anstoßen an der Seitenwand, ein Rutschen, zum Beispiel auf einer Schrägfläche, und dergleichen.

Die Hauptförderrichtung ist zweckmäßigerweise quer zur Zuführrichtung ausgerichtet, also in einem Winkel zwischen 50° und 110°, vorzugsweise zwischen 80° und 100°, wobei 0° eine Parallelität der Hauptförderrichtung zur Zuführrichtung und 180° eine Antiparallelität angibt. Hierdurch kann die Packgutfördervorrichtung auch bei einer Vielzahl von Zuführförderern kompakt gehalten werden. Die Zuführrichtungen der Zuführförderer sind zweckmäßigerweise parallel zueinander ausgerichtet, wobei insbesondere die Zuführförderer selbst parallel zueinander ausgerichtet sind. Sie können auf den Hauptförderer treffen, der zweckmäßigerweise entlang sämtlicher Zuführförderer durchgehend quer zu den Zuführförderern ausgerichtet ist, sodass also die Hauptförderrichtung durchgehend entlang aller Zuführförderer quer zu den Zuführrichtungen ausgerichtet ist. Die Zuführförderer reichen zweckmäßigerweise bis zum Hauptförderer, wobei die Zuführrichtungen zweckmäßigerweise bis zu dem oder den Förderelementen des Hauptförderers reicht, die in Hauptförderrichtung transportieren.

Die Ausrichtung des Hauptförderers, durch die die Packstücke auf die Seitenwand zu und insbesondere dann an der Seitenwand entlang geführt werden, kann eine Anordnung der Hauptförderrichtung in einem insbesondere spitzen Winkel zur Seitenwand sein, sodass die Packgüter bei einer Bewegung in Hauptförderrichtung der Seitenwand angenähert werden. Diese Ausrichtung kann zweckmäßigerweise durch eine andere Ausrichtung begünstigt oder ersetzt werden, nämlich eine Neigung des Hauptförderers, beziehungsweise des Förderelements des Hauptförderers, zur Seitenwand hin, sodass ein Rutschen der Packgüter auf dem Förderelement zur Seitenwand hin durch die Schwerkraft begünstigt wird.

In einer vorteilhaften Ausführungsform der Erfindung wird der Hauptstrom auf dem Hauptförderer in einer Hauptförderrichtung bewegt, die angewinkelt zur Seitenwand ist, und die Packgüter des Hauptstroms werden durch die Bewegung in Hauptförderrichtung auf die Seitenwand zu und dann an dieser entlang geführt. Sind die Packgüter an der Seitenwand, so werden sie durch die Bewegung des Hauptförderers in Hauptförderrichtung mit einem Druck gegen die Seitenwand an dieser entlang gefördert, mit einer von der Hauptförderrichtung um den entsprechenden Winkel abweichende Richtung. Das Packgut kann an der Seitenwand stetig verdichtet und auch an der Seitenwand ausgerichtet werden, sodass die Verdichtung sowohl durch das Hinführen zur Seitenwand als auch durch die Ausrichtung besonders vollständig zustande kommen kann.

Die Hauptförderrichtung ist angewinkelt zur Seitenwand, also in einem Winkel α ≠ 0° bzw. α ≠ 180° zur Seitenwand angeordnet. Vorteilhaft ist ein Winkel zwischen 1° und 20° zur Seitenwand, insbesondere zwischen 2° und 10°. Der Winkel ist in der Ebene der Förderfläche des Hauptförderers zu sehen, also bei waagerechter Förderfläche ist es ein Winkel zwischen zwei waagerechten Richtungen und bei geneigter Förderfläche ein Winkel in der entsprechenden Neigungsebene.

Die Seitenwand begrenzt die seitliche Bewegung des Packguts im Packgutstrom. Durch die seitliche Ablenkung des Packguts in den Hauptstrom hinein durch die Seitenwand kann der Packgutstrom durch das Schließen von Lücken gezielt und langsam verdichtet werden. Schräg zur Hauptförderrichtung stehendes rechtwinkliges Packgut kann durch die Seitenwand im weiteren Verlauf des Transports durch den Hauptförderer parallel zur Seitenwand hin ausgerichtet werden, wodurch sich die Ausnutzung und damit der Füllgrad der zur Verfügung stehenden Fläche auf dem Hauptförderer beziehungsweise dessen Förderelement weiter verbessert. Durch die gezielte Verdichtung und gleichmäßige Ausrichtung des Packguts zur Seitenwand wird Raum geschaffen für eine oder mehrere stromabwärts nachfolgende Einspeisungen weiterer Zuführförderer.

Zweckmäßigerweise ist die Seitenwand zwischen zwei Zuführmündungen von zwei der Zuführförderer und relativ zum Hauptstrom gegenüber den Zuführmündungen angeordnet. Die Anordnung kann derart sein, dass die Packgüter von der Seitenwand in Richtung zur Zuführmündung des nächsten Stroms abwärts liegenden Zuführförderers gedrückt werden. Insofern kann die Seitenwand den Hauptstrom zu dieser Zuführmündung hin verengen. Durch diese Verengung kann auf der der Seitenwand abgewandten Seite des Hauptförderers beziehungsweise des Förderelements von diesem Platz für das Hinzufügen des weiteren Packgutstroms aus dem Strom abwärts liegenden Zuführförderer geschaffen werden. Es ist insofern vorteilhaft, wenn durch die Bewegung des Packguts in Hauptförderrichtung auf der der Seitenwand abgewandten Seite des Hauptförderers packgutfreier Raum für einen weiteren hinzutretenden Packgutstrom entsteht.

Die Erfindung ist besonders vorteilhaft anwendbar in Paketzentren zur Zusammenführung von Post- oder Kurierpaketen. Jeder Paketstrom kann von einer Entladestation kommen, beispielsweise einer LKW-Entladestation oder einer Rollcontainer-Entladestation, die beispielsweise von einem Entlader unter Verwendung eines Entladeteleskops entladen wird, sodass die Pakete vom Entladeteleskop direkt oder indirekt auf den Zuführförderer gefördert werden. Je nach Zusammensetzung des Ladeguts oder der Aktivität des Entladers ist der Paketstrom sehr ungleichmäßig. Durch die Erfindung kann auch das Zusammentreffen mehrerer sehr starker Paketströme in den Hauptstrom störungsarm bewältigt werden. Insofern ist es vorteilhaft, wenn als Packgüter Post- oder Kuriersendungen, insbesondere Pakete, aus einer LKW-Entladestation auf einen Entladeförderer, insbesondere ein Entladeteleskop, geladen werden, der die Pakete auf den Zuführförderer fördert, das wiederum die Pakete in den Hauptstrom speist. Der Zuführförderer kann insofern über den Entladeförderer mit jeweils einer LKW-Entladestation verbunden sein.

Eine Anordnung der Seitenwand in einem Winkel zwischen 1° und 20° zur Hauptförderrichtung kann einfach realisiert werden, wenn ein Förderelement zumindest teilweise unter der Seitenwand hindurch läuft, die Seitenwand also über dem Förderelement angeordnet ist. Hierbei kann zwischen Seitenwand und Förderelement ein vertikaler Spalt vorhanden sein, um ein Reiben des Förderelements an der Seitenwand zu verhindern.

Um einem Einklemmen von flexibler Verpackung zwischen Seitenwand und Förderelement entgegenzuwirken, ist es außerdem vorteilhaft, wenn die zur Hauptförderrichtung angewinkelte Seitenwand möglichst kurz ist, beziehungsweise der angewinkelte Abschnitt der Seitenwand möglichst kurz ist. Einklemmte Sendungen werden nicht über eine lange Strecke mitgeschleift, wodurch die Gefahr der Beschädigung verringert wird. Um dennoch eine gewisse Stromverdichtung zu erreichen, ist es vorteilhaft, wenn der Winkel zwischen Hauptförderrichtung und Seitenwand relativ groß ist, also in einem Bereich zwischen 5° und 20°, insbesondere 10° und 20°.

Ein so großer Winkel birgt jedoch die Gefahr, dass der Hauptstrom in diesem Fördersegment zu stark verdichtet wird und hierdurch ein Förderstau entsteht. Um einem solchen Stau entgegenzuwirken, wird vorgeschlagen, dass die Seitenwand gefedert gelagert ist. Sie kann so durch ein Anstoßen des Packguts entgegen des Federdrucks bewegt werden, insbesondere verschwenkt werden. Auf diese Weise kann insbesondere der Winkel zwischen der Seitenwand und der Hauptförderrichtung verkleinert werden, sodass die Verdichtung verringert wird. Der bereits dichte und staugefährdete Hauptstrom drückt sich - die Seitenwand nach außen bewegend - durch die Verengung, und ein Stau wird vermieden. Zweckmäßigerweise federt die Seitenwand nach Abgleiten des Packguts in einer Ausgangsstellung zurück, sodass ein geringerer Hauptstrom entlang der Seitenwand in ihrer Ausgangsstellung geführt wird.

Um auch bei einer beweglichen Lagerung der Seitenwand eine Mindestverdichtung zu erreichen, ist es vorteilhaft, wenn die Seitenwand gegen einen Anschlag stößt und in dieser Position einen Winkel zwischen 1° und 10° zur Hauptförderrichtung einschließt. Es kann trotz der hohen Dichte des Hauptstroms ein der Seitenwand gegenüberliegender Bereich des Förderelements für die Einführung eines weiteren Packgutstroms frei gehalten werden.

In einer weiteren vorteilhaften Ausgestaltung der Erfindung weist zumindest einer der Zuführförderer einen in Stromrichtung schräg nach unten ausgerichteten Übergang auf. Auf diesem Übergang kann das Packgut durch die Schwerkraft in Richtung zum Hauptförderer bewegt werden, sodass er in einem Winkel zur Hauptförderrichtung, insbesondere quer zur Hauptförderrichtung auf dem Hauptförderer in Richtung zur Seitenwand rutscht. Das Packgut aus dem Packgutstrom des Zuführförderers kann auf diese Weise direkt zur Seitenwand hin gelenkt werden, sodass der auf diese Weise gebildete Teil des Hauptstroms bereits zur Seitenwand hin verdichtet wird. Der Übergang kann eine Rutsche sein, auf dem das Packgut nach unten rutscht.

Bei temporär sehr dichten Packgutströmen aus zumindest zwei Zuführförderern kann der Hauptförderer bereits so belegt sein, dass nicht genügend Platz für die Zuführung eines dritten und momentan ebenfalls sehr starken Packgutstroms auf dem Hauptförderer bleibt. Um einen Stau und ein Quetschen der Packgüter zu vermeiden, ist es vorteilhaft, wenn die Packgutbelegung auf dem Hauptförderer im Hauptstrom erfasst wird. Dies kann zweckmäßigerweise durch einen Sensor geschehen, der am Hauptförderer angeordnet sein kann. Der Sensor kann ein Belegungssensor sein, der eine packgutfreie Strecke auf dem Hauptförderer misst. Durch eine Vielzahl von nacheinander erfolgenden Streckenmessungen kann eine freie Fläche auf dem Hauptförderer ermittelt werden.

Vorteilhafterweise steuert eine Steuereinheit eine Zuführung eines Packgutstroms von einem Zuführförderer auf den Hauptförderer in Abhängigkeit einer von der Strecke abgeleiteten Größe. Diese Größe kann eine packgutfreie Fläche auf dem Hauptförderer sein, die als Steuergröße verwendet werden kann. Der Belegungssensor kann ein Entfernungssensor sein, der eine Strecke zwischen dem Sensor und dem Packgut auf dem Hauptförderer misst, insbesondere ein Laserentfernungssensor. Zweckmäßigerweise ist der Sensor gegenüber der Seitenwand angeordnet und erkennt insbesondere eine Strecke zum in Messrichtung angeordneten nächsten Packgut.

Wie bereits erwähnt, kann der Hauptförderer quer zur Förderrichtung, insbesondere zur Seitenwand hin, geneigt sein, sodass eine Verdichtung des Packguts zur Seitenwand hin begünstigt wird. Entsprechend ist es vorteilhaft, wenn der Hauptförderer eine Hauptfördereinheit mit einem sich in Hauptförderrichtung bewegenden Förderelement aufweist, auf dem die Packgüter transportiert werden, und die Ausrichtung des Hauptförderers derart ist, dass das Förderelement zur Seitenwand hin in einem Neigungswinkel > 3° zur Waagerechten geneigt ist. Die Packgüter können auf dem Förderelement durch die Schwerkraft getrieben zur Seitenwand hinrutschen, sodass sie dort verdichtet werden und ein gegenüberliegender Raum auf dem Hauptförderer freigegeben wird.

Die Erfindung ist außerdem gerichtet auf eine Packgutfördervorrichtung zum Zusammenführen von mehreren getrennten Packgutströmen in einen Hauptstrom. Die Packgutfördervorrichtung umfasst zweckmäßigerweise einen Hauptförderer, der ein Förderelement, einen Förderantrieb zum Antreiben des Förderelements in einer Hauptförderrichtung und zumindest eine Seitenwand aufweist, die den Hauptstrom seitlich begrenzt. Weiter kann die Packgutfördervorrichtung mehrere Zuführförderer umfassen, die jeweils ein Förderelement zum Fördern des entsprechenden Packgutstroms in eine Zuführrichtung und einen Förderantrieb zum Antreiben des Förderelements in die Zuführrichtung aufweisen. Diese ist zweckmäßigerweise quer zur Hauptförderrichtung angeordnet. Zum Begünstigen einer störungsfreien Zusammenführung von mehreren Packgutströmen wird vorgeschlagen, dass der Hauptförderer erfindungsgemäß in der Weise relativ zur Seitenwand angeordnet ist, dass Packgüter des Hauptstroms aufgrund der Ausrichtung des Hauptförderers relativ zur Seitenwand und auf diese zugeführt werden. Die Seitenwand ist zumindest teilweise über einem Förderelement des Hauptförderers angeordnet und bildet einen Spalt zum Förderelement, der sich stromabwärts vertikal vergrößert. Die Packgutfördervorrichtung dient zweckmäßigerweise dazu, das erfindungsgemäße Verfahren durchzuführen.

In einer vorteilhaften Ausführungsform der Erfindung ist der Hauptförderer so ausgerichtet, dass die Seitenwand angewinkelt zur Hauptförderrichtung steht. Insbesondere wird hierdurch eine Förderbreite des Förderelements des Hauptförderers in Hauptförderrichtung verengt. Durch die Ausrichtung des Hauptförderers kann die Seitenwand in den Hauptstrom hineinragen. Die Verengung erfolgt vorteilhafterweise zu einer Mündung des nächsten stromabwärts gelegenen Zuführförderers hin. Der Winkel zwischen Seitenwand und Hauptförderrichtung beträgt zweckmäßigerweise zwischen 1° und 20°.

Um einen Packgutstau direkt an der Einmündung eines Zuführförderers auf den Hauptförderer zu verhindern, ist es günstig, wenn die Verengung durch die angewinkelte Seitenwand im Bereich der Einmündung geringer ist als stromabwärts hinter der Einmündung. Insofern ist es zweckmäßig, wenn die Seitenwand einen Abschnitt in Hauptförderrichtung aufweist und einen zweiten stromabwärts gelegenen Abschnitt, der den Winkel zur Hauptförderrichtung bildet. Im Bereich der Einmündung kann auf die Verengung verzichtet werden, die erst stromabwärts eintritt. Insofern ist der Abschnitt in Hauptförderrichtung zweckmäßigerweise gegenüber der Mündung eines der Zuführförderers gelegen.

Zwischen zwei Mündungen von zwei Zuführförderern kann es wiederum vorteilhaft sein, wenn die Seitenwand zuerst eine starke Verengung bildet und dann die Verengung abnimmt, beispielsweise um eine Verklemmung von Folienverpackung zwischen Förderelement und Seitenwand zu vermeiden, bzw. diese wieder freizugeben. Insofern ist es vorteilhaft, wenn die Seitenwand einen Abschnitt umfasst, der den Winkel zwischen 1° und 10° zur Hauptförderrichtung bildet, und die Seitenwand stromaufwärts einen zweiten Abschnitt aufweist, der in einem größeren Winkel zur Hauptförderrichtung ausgerichtet ist. Zweckmäßigerweise liegen beide Bereiche zumindest teilweise zwischen den Mündungen zweier Zuführförderer auf den Hauptförderer und/oder im Bereich einer Mündung, wobei die Bereiche als Bereiche in Hauptförderrichtung zu sehen sind, die Flächen des Hauptförderers gegenüber einer Mündung mit einschließen.

Der an mehreren Mündungen von mehreren Zuführförderern entlang geführte Hauptförderer kann ein gleichmäßig breites Förderelement entlang der Mündungen aufweisen. Hierdurch wird zwar eine relativ einfache Konstruktion des Hauptförderers ermöglicht, durch einen Winkel der Seitenwand zur Hauptförderrichtung wird jedoch außerhalb der Seitenwand relativ viel Förderelementplatz verschenkt, auf dem nicht befördert wird, an dem also der Hauptstrom vorbeigeführt wird. Um eine kompaktere Anlage herstellen zu können, ist es vorteilhaft, wenn der Hauptförderer zumindest zwei Fördereinheiten aufweist, die quer zur Hauptförderrichtung versetzt zueinander angeordnet sind. Die Versetzung ist zweckmäßigerweise auf beiden Seiten vorhanden, das heißt jede Fördereinheit ragt an einer Seite über die andere hinaus.

Bei der Zusammenführung von mehreren Packgutströmen in einen Hauptstrom entsteht eine technische Herausforderung dann, wenn die Summe der Breiten der Zuführförderer größer ist als die Breite des Hauptförderers, sodass die Breite der Einzelzuführungen die Breite der gemeinsamen Abführung übersteigt, insbesondere um mehr als 30 %. Oder - um eventuell unterschiedliche Fördergeschwindigkeiten mit einzubeziehen - wenn die von den einzelnen Zuführförderern in der Summe pro Zeit zugeführte Förderfläche die in der gleichen Zeit vom Hauptförderer abgeführte Förderfläche übersteigt, insbesondere um mehr als 30 %.

Diese Herausforderung kann etwas abgemildert werden, wenn der Hauptförderer zumindest zwei Fördereinheiten aufweist, und die in Hauptförderrichtung stromabwärts angeordnete Fördereinheit breiter ist als die stromaufwärts gelegene Fördereinheit. Zwischen den Fördereinheiten kann eine Mündung eines Zuführförderers liegen.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammenfasst werden. Insbesondere sind diese Merkmale jeweils einzeln und in beliebiger geeigneter Kombination sowohl mit dem erfindungsgemäßen Verfahren als auch mit der erfindungsgemäßen Vorrichtung gemäß den unabhängigen Ansprüchen kombinierbar. So sind Verfahrensmerkmale auch als Eigenschaft der entsprechenden Vorrichtungseinheit gegenständlich formuliert zu sehen und umgekehrt.

Die oben beschriebenen Eigenschaften, Merkmale und Vorteile dieser Erfindung, sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und/oder mit einem beliebigen der Ansprüche kombiniert werden.

Es zeigen:
- FIG 1: eine schematische Darstellung einer Packgutfördervorrichtung von oben mit drei Zuführförderern und einem quer zu diesen angeordneten Hauptförderer,
- FIG 2: die Packgutfördervorrichtung aus FIG 1 mit einer mehrteiligen Seitenwand, deren Abschnitte jeweils versetzt zueinander sind,
- FIG 3: eine weitere Packgutfördervorrichtung mit einem Hauptförderer, der drei jeweils zueinander versetzt angeordnete Fördereinheiten aufweist,
- FIG 4: eine weitere Packgutfördervorrichtung mit einem Hauptförderer mit versetzt zueinander angeordneten Fördereinheiten, deren Seitenwände Zonen ohne Winkel zur Hauptförderrichtung aufweisen und
- FIG 5: einen seitlichen Schnitt durch den mittleren Zuführförderer und den Hauptförderer aus FIG 1 mit einem zur Seitenwand hin geneigten Förderelement des Hauptförderers.

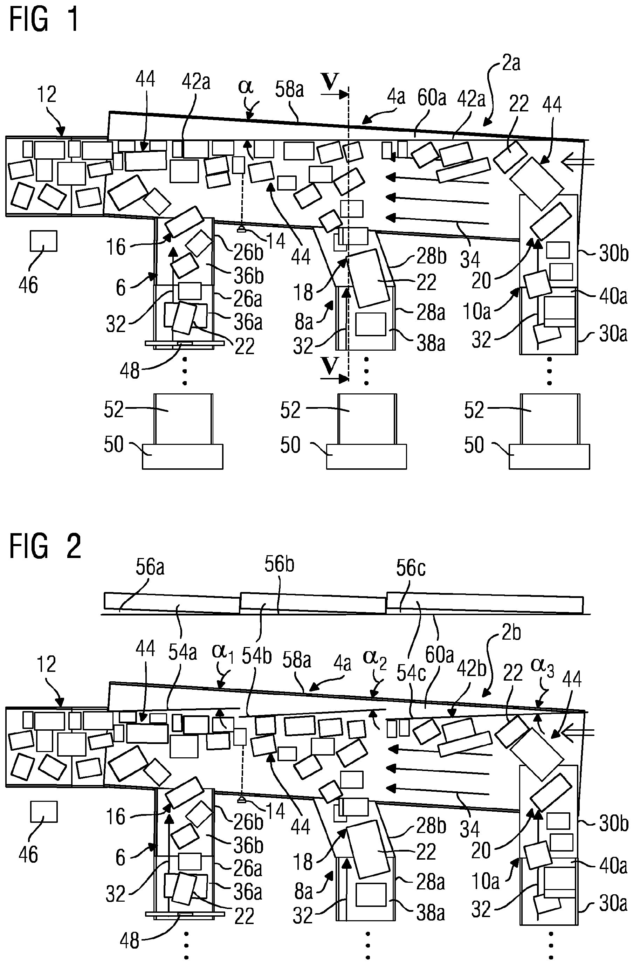

FIG 1 zeigt eine Packgutfördervorrichtung 2a mit einem Hauptförderer 4a mit einem Förderelement 60a in Form eines Förderbandes und drei Zuführförderern 6, 8a, 10a. Unmittelbar stromabwärts des Hauptförderers 4a schließt sich ein Abförderer 12 an. Der Hauptförderer 4a ist mit einem Sensor 14 ausgestattet, der ein Laser-Entfernungsmesser zum Messen der Entfernung von einem Sensorausgang in Messrichtung, die in FIG 1 durch eine gestrichelte Linie dargestellt ist, bis zu einem nächsten Gegenstand, auf den der Messstrahl des Sensors 14 in Messrichtung auftrifft.

Auf den drei Zuführförderern 6, 8a, 10a wird jeweils ein Packgutstrom 16, 18, 20 in Richtung zum Hauptförderer 4a und auf diesen herauf transportiert. Die Packgutströme 16, 18, 20 umfassen jeweils eine Vielzahl von Packgütern 22, die Post- oder Kurierpakete in einem Paketzentrum sind. Die einzelnen Packgüter 22 liegen inhomogen beziehungsweise ungleichmäßig in den Packgutströmen 16, 18, 20 beziehungsweise auf den Zuführförderern 6, 8a, 10a und zwar sowohl in ihrer Ausrichtung im Raum, in ihrem Abstand zueinander und in ihrer seitlichen Lage auf den Zuführförderern 6, 8a, 10a. Zudem liegen einzelne Packgüter 22 übereinander. Auch in ihrer Größe, Beschaffenheit, Form, Gewicht und ihrem Material sind die Packgüter 22 inhomogen beziehungsweise verschieden voneinander, wobei sowohl Außenverpackungen aus Pappe als auch Folienverpackungen vorhanden sind, wobei die Folienverpackungen je nach Ausführung des Packguts 22 harte Gegenstände umgibt, sodass das Packgut in seiner Form fest und im Wesentlichen unveränderlich ist, als auch weiches Packgut 22 in einer Folienverpackung vorhanden ist, sodass das gesamte Packgut weich, flexibel und verformbar ist, wie beispielsweise in Folie eingeschweißte Bekleidung oder andere Gegenstände.

Jeder der Zuführförderer 6, 8a, 10a weist eine oder mehrere Fördereinheiten 26a, 26b, 28a, 28b, 30a, 30b auf, die den jeweiligen Packgutstrom 16, 18, 20 in einer Zuführrichtung 32 befördern. Die Zuführrichtung 32 ist in einem Winkel von 87° zu einer Hauptförderrichtung 34 ausgerichtet, in der Packgut 22 auf dem Hauptförderer 4a transportiert wird. Die Fördereinheiten 26a, 26b, 28a, 30a weisen jeweils zumindest ein Förderelement 36a, 36b, 38a, 40a auf. Die Förderelemente 36a, 36b, 38a, 40a können Bandelemente, Rollenbahnen, Rutschen oder eine Kombination davon sein. Im gezeigten Ausführungsbeispiel weisen sie jeweils ein umlaufendes Element auf, beispielsweise ein Förderband, eine Mehrzahl von Fördergurten oder dergleichen, das sich auf der Oberseite, auf der die Packgüter 22 auf dem entsprechenden Förderelement 36a, 36b, 38a, 40a aufliegen, in der entsprechenden Förderrichtung bewegt. Die Fördereinheiten 28b und 30b sind Rutschen mit einer Neigung zum Hauptförderer 4a hin, auf denen die Packgüter 22 nach unten auf den Hauptförderer 4a rutschen. Sie gelangen so mit Schwerkraftunterstützung auf das Förderelement 60a des Hauptförderers 4a und rutschen auf diesem noch ein Stück weiter in Richtung auf eine Seitenwand 42a, die den Hauptstrom 44 des Packguts 22 auf dem Hauptförderer 4a seitlich begrenzt.

Die Zuführrichtung 32 ist durch die Bewegung der Förderelemente 36a, 36b, 38a, 40a, z.B. Förderbänder, der Fördereinheiten 26a, 26b, 28a, 30a festgelegt, die sich in Zuführrichtung 32 bewegen. Die Hauptförderrichtung 34 ist durch das Förderelement 60a festgelegt, das sich in Hauptförderrichtung 34 bewegt. Packgüter 22 auf den Förderelementen 5, 36a, 36b, 38a, 40a werden durch deren Bewegung in die entsprechende Förderrichtung bewegt.

Jeder der Zuführförderer 6, 8a, 10a ist mit einer LKW-Entladestation 50 über eine Entladeeinrichtung 52, beispielsweise ein Entladeteleskop, verbunden. Die Verbindung kann eine direkte Verbindung oder eine Verbindung über weitere Förderer sein, wie durch die drei Punkte in FIG 1 jeweils angedeutet ist. Während des Betriebs werden die Packgüter 22 aus dem LKW ausgeladen, beispielsweise manuell, auf die Entladeeinrichtung 52 gelegt, die zweckmäßigerweise bis in einen Laderaum des LKWs hineinreicht. Von der Entladeeinrichtung 52 werden die Packgüter 22 auf die entsprechenden Zuführförderer 6, 8a, 10a gefördert.

Die Darstellungen der Anordnungen der einzelnen Fördereinheiten 26a-30b ist in FIG 1 nur beispielhaft dargestellt. Selbstverständlich können die Zuführförderer 6, 8a, 10a auch nur eine einzige Fördereinheit oder mehr als zwei Fördereinheiten aufweisen, die mit unterschiedlichem horizontalen und/oder vertikalem Winkel zueinander angeordnet sind. Ebenso ist es möglich, dass stromaufwärts des ersten Zuführförderers 10a eine weitere Zuführung, beispielsweise für eine Handeingabe oder Packgutrückführung auf den Hauptförderer 4a vorhanden ist, wie in FIG 1 durch einen dicken Pfeil auf der rechten Seite angedeutet ist.

Die Förderbreiten der Zuführförderer 6, 8a, 10a beträgt jeweils 100 cm. Die Förderbreite des Hauptförderers 4a nimmt in Förderrichtung, also stromabwärts, ab und beginnt bei knapp 200 cm und ist an der schmalsten Stelle knapp 150 cm breit. Die schmalste Stelle ist im Übergang zum Abförderer 12, der ebenfalls diese Förderbreite aufweist. Die Förderbreite des Hauptförderers 4a ist von der Seitenwand 42a bis zum gegenüber liegenden Bandende des Förderelements 60a zu sehen.

Die Seitenwand 42a ist schräg zur Hauptförderrichtung 34 angeordnet, und zwar mit einem Winkel von 3°. Die Seitenwand 42a ragt so von der den Mündungen der Zuführförderer 6, 8a, 10a gegenüber liegenden Seite in den Hauptstrom 44 hinein. Durch ihre angewinkelte Ausrichtung schiebt die Seitenwand 42a außen liegende Packgüter 22 - relativ zur Hauptförderrichtung 34 - in Richtung zu den Mündungen der stromabwärts liegenden Zuführförderer 6, 8a, so dass sie in dieser Richtung über das Förderelement 60a rutschen. Das Förderelement 60a des Hauptförderers 4a läuft also unter der Seitenwand 42a hindurch, wobei der Anteil des Förderelements 60a auf der dem Hauptstrom 44 abgewandten Seiten der Seitenwand 42a in Richtung stromabwärts zunimmt, in dem Ausführungsbeispiel aus FIG 1 kontinuierlich, insbesondere über die gesamte Länge des Hauptförderers 4a.

Der Hauptförderer 4a erstreckt sich in seiner Länge über sämtliche Mündungen der Zuführförderer 6, 8a, 10a, die ihren Packgutstrom 16, 18, 20 auf den Hauptförderer 4a fördern. Generell gesprochen kann ein Hauptförderer als ein Fördersystem definiert werden, das entlang der Mündungen von zumindest drei, insbesondere allen Zuführförderern verläuft, die ihren Packgutstrom auf den Hauptförderer fördern. Stromabwärts des letzten bzw. am weitesten stromabwärts liegenden Zuführförderers kann der Hauptförderer in einem Abförderer übergehen, wie dies beispielhaft in FIG 1 anhand des Hauptförderers 4a und Abförderers 12 dargestellt ist. Die Förderrichtung des Abförderers 12 ist jeweils zweckmäßigerweise angewinkelt zur Hauptförderrichtung 34, und ist insbesondere parallel zur Seitenwand 42, und wenn diese in mehrere Abschnitte geteilt sein sollte, parallel zum letzten Abschnitt, also dem am weitesten stromabwärts liegenden Abschnitt, der Seitenwand 42. Stromaufwärts beginnt der Hauptförderer 4a stromaufwärts des am weitesten stromaufwärts liegenden Zuführförderers 10a. Der stromaufwärts liegende Beginn und das stromabwärts liegende Ende des Hauptförderers 4a liegt zweckmäßigerweise in einem Abstand von weniger als 3 Meter stromaufwärts vom obersten Zuführförderer 10a beziehungsweise stromabwärts vom untersten Zuführförderer 6.

Je nach Ausführung der Zuführförderer 6, 8a, 10a können diese einen Übergangsförderer mit einer Förderrichtung aufweisen, die abweicht von der Zuführrichtung 32. Dies ist in FIG 1 beispielhaft anhand des Zuführförderers 8a dargestellt, dessen Fördereinheit 28b die Förderrichtung des Packgutstrom 18 bereits ein Stück weit in die Richtung des Hauptstrom 44 umlenkt, beziehungsweise in die Hauptförderrichtung 34 umlenkt. Hierdurch treffen die aufrutschenden Packstücke nicht stumpf auf den vorhandenen Packgutstrom. Abgesehen davon, dass die Förderrichtung auch der Fördereinheit 28b in FIG 1 noch als quer zur Hauptförderrichtung 34 anzusehen ist, ist auch eine größere Umlenkung im Rahmen der Erfindung möglich, wenn diese eine Länge von beispielsweise 3 Meter nicht überschreitet. Ziel der queren Anordnung von Hauptförderrichtung 34 und Zuführrichtung 32 ist der kompakten Anordnung der Packgutfördervorrichtung 2a, sodass die Packgutströme 16, 18, 20 nicht parallel wie beispielsweise bei einer Autobahneinfahrt, zusammengeführt werden.

Während des Betriebs der Packgutfördervorrichtung 2a wird das Packgut 22 im Hauptstrom 44 in Hauptförderrichtung 34 bewegt und somit in einem spitzen Winkel, der der Winkel α zwischen der Seitenwand 42a und der Hauptförderrichtung 34 ist, auf die Seitenwand 42a zu bewegt. Ein Teil der Packgüter 22 schlägt an die Seitenwand 42a an und wird durch deren seitliche Ausrichtung relativ zur Hauptförderrichtung 34 auf andere noch in Hauptförderrichtung 34 bewegte Packgüter 22 zu bewegt. Hierdurch wird der Hauptstrom 44 verdichtet, sodass Lücken zwischen den Packgütern 22 im Bereich der Seitenwand 42a geschlossen werden. Außerdem werden schräg zur Hauptförderrichtung 34 stehende Packgüter 22 durch die Seitenwand 42a in Verlauf ihres Transports auf dem Hauptförderer 4a durch die Reibung mit der Seitenwand 42a gedreht, bis sie parallel zur Seitenwand 42a ausgerichtet sind und mit einer Flachseite an der Seitenwand 42a entlang rutschen. Auch hierdurch wird die Ausnutzung, also der Füllgrad, der Förderfläche des Förderelements 60a des Hauptförderers 4a gesteigert. Durch die Verdichtung und Vergleichmäßigung der Ausrichtung der Packgüter 22 im Hauptstrom 44 parallel zur Seitenwand 42a wird Raum geschaffen für die nächstfolgende Einspeisung des nächstfolgenden Packgutstroms des am nächsten stromabwärts liegenden Zuführförderers 6, 8a.

Während des Entlanggleitens der Packgüter 22 an der Seitenwand 42a rutschen diese mit einer Bewegungskomponente quer zur Hauptförderrichtung 34 über den Hauptförderer 4a beziehungsweise dessen Förderelement 60a. Hierbei sollte eine starke mechanische Belastung der Unterseite der Packgüter 22 vermieden werden, insbesondere ein Kippen der Packgüter 22 von der Seitenwand 42a weg in den Hauptstrom 44 hinein. Um dies zu erreichen ist das Förderelement 60a des Hauptförderers 4a, welcher beispielhaft ein Bandförderer ist, mit einem Förderband mit einem niedrigen Reibungskoeffizienten versehen, sodass sich das darauf befindliche Packgut 22 leicht parallel zur Förderfläche des Hauptförderers 4a verschieben und drehen lassen kann, ohne dass eine Beschädigung des Packguts 22 droht. Durch den niedrigen Reibungskoeffizient wird auch ein queres Rutschen der Packgüter 22 von den Schrägen der Fördereinheiten 28b, 30b auf den Hauptförderer 4a zur Seitenwand 42a hin erleichtert, sodass die Packgüter 22 durch ihre Eigengeschwindigkeit bis zur Seitenwand 42a rutschen, wenn keine anderen Packgüter 22 den Weg dorthin versperren.

Die Fördergeschwindigkeiten der Zuführförderer 6, 8a, 10a und des Hauptförderers 4a werden durch eine Steuereinheit 46 gesteuert und können variieren, wobei eine Abförderleistung es Hauptförderers 4a größer sein sollte, als die Zuförderleistung aller Zuführförderer 6, 8a, 10a zusammen. Ebenfalls möglich ist, dass die Fördergeschwindigkeiten der Zuführförderer 6, 8a, 10a in einem festen Verhältnis zueinander stehen - unabhängig von einer übergeordneten Regelung durch eine Steuereinheit 46, insbesondere sind die Fördergeschwindigkeiten identisch, ebenso die Abfördergeschwindigkeit des Abförderers 12, welche identisch oder höher gegenüber der Fördergeschwindigkeit des Hauptförderers 4a und der Zufuhrförderer 6, 8a, 10a sein kann.

Während die Zuführförderer 8a, 10a in der Anordnung gemäß FIG 1 aufgrund des Aufbaus und der Anordnung kontinuierlich ihren Packgutstrom 18, 20 auf den Hauptförderer 4a speisen, ist zur Einspeisung des Packgutstroms 16 des weiter stromabwärts liegenden Zufuhrförderers 6 eine Zuführsteuerung vorhanden, die von der Steuereinheit 46 ausgeführt wird. Diese liest die Daten des Sensors 14 aus, der anhand einer wiederholten Streckenmessung bis zum nächsten Packgut 22, auf das der Messstrahl des Sensors 14 auftritt, eine freie Strecke des Hauptförderers 4a gegenüber der Seitenwand 42a ermittelt. Aus den freien Strecken ermittelt die Steuereinheit 46 eine freie Fläche auf dem Förderelement 60a auf der der Seitenwand 42a gegenüber liegenden Seite.

Wie aus FIG 1 zu sehen ist, ist etwa knapp die Hälfte der zur Verfügung stehenden Breite des Hauptstroms 44 beziehungsweise der Förderfläche des Hauptförderers 4a im Bereich des Sensors 14 gegenüber der Seitenwand 42a frei. Diese Förderfläche ist ausreichend für die Einspeisung des Packgutstroms 16 vom Zuführförderer 6, sodass dieser seinen Packgutstrom 16 in den Hauptstrom 44 einspeist. Wird die freie Förderfläche zu knapp, so reduziert die Steuereinheit 14 die Fördergeschwindigkeit des Zuführförderers 6, im Maximalfall bis zum Stillstand, sodass die Zuführung des Packgutstroms 16 in den Hauptstrom 44 vermindert wird. Hierdurch kann eine Überfüllung und eine daraus resultierende Störung des Flusses des Hauptstroms 44 und eventuelle Beschädigungen des Packguts 22 vermieden werden. Der Überwachungssensor 14 ist ein Abstandssensor, insbesondere ein Laserabstandssensor, welcher den aktuell zur Verfügung stehenden Freiraum an der Mündung des Zuführförderers 6 misst.

Es kann vorkommen, dass nicht genügend Freiraum für die Einspeisung eines Packgutstroms 16 aus einem Zuführförderer 6 zur Verfügung steht, weshalb die Einspeisung verringert oder sogar gestoppt werden muss. Auf der anderen Seite kann es vorkommen, dass der Packgutstrom 16 auf dem Zuführförderer 6 zum Erliegen kommt, beispielsweise weil ein an den Zuführförderer 6 angeschlossener LKW leergeräumt ist. Eine Verlangsamung oder Unterbrechung der Fördergeschwindigkeit des Zuführförderers 6 ist in diesem Fall nicht notwendig. Insbesondere wenn nur der stromabwärts liegende Teil des Zuführförderers 6 nicht oder wenig mit Packgut 22 belegt ist und ein stromaufwärts liegender Abschnitt stark belegt ist, führt eine Verringerung der Fördergeschwindigkeit dazu, dass ein Bearbeiter seinen LKW wegen der Überfüllung des Zuführförderers 6 nicht oder nur langsam weiter entleeren kann. Eine Drosselung der Zuführgeschwindigkeit des Zuführförderers 6 ist nicht notwendig wegen der geringen Belegung des Zuführförderers 6 stromabwärts vor der Mündung in den Hauptförderer 4a.

Um bei einer solchen Situation die Entleerung eines LKWs oder dergleichen nicht zu stören, umfasst die Packgutfördervorrichtung 2a einen Belegungssensor 48, der über dem Zuführförderer 6 beziehungsweise dessen Förderelement 60a angebracht ist. Dieser liefert seine Daten der Steuereinheit 46, die aus den Daten die Belegung der Förderfläche des Zuführförderers 6 unter dem Belegungssensor 48 ermittelt. Aus dieser, dem Abstand bis zur Mündung des Zuführförderers 6 und der momentanen Fördergeschwindigkeit des Zuführförderers 6 wird die Einspeisefläche berechnet, die durch Packgüter 22 des Packgutstroms 16 des Zuführförderers 6 bei der Einspeisung belegt wird. Diese Belegungsfläche wird mit der vom Sensor 14 gemessenen beziehungsweise von der Steuereinheit 46 ermittelten freien Fläche verglichen und in Abhängigkeit von diesem Vergleich wird die Fördergeschwindigkeit des Zuführförderers 6 gesteuert.

Die Anordnung und die Anzahl der vorhandenen Sensoren 14, 48 ist abhängig von der Anzahl der vorhandenen Zuführförderer, deren Breiten, der minimalen Förderbreite des Hauptförderers 4a, insbesondere an dessen Übergang zum Abförderer 12 und den Fördergeschwindigkeiten der Zuführförderer 6, 8a, 10a und des Hauptförderers 4a. So kann ein einzelner oder jeweils ein Sensor 14 stromaufwärts von solchen Zuführförderern 6, 8a angeordnet sein, zu denen weiter stromaufwärts ein weiterer Zuführförderer 10a angeordnet ist.

FIG 2 zeigt eine Packgutfördervorrichtung 2b, die weitgehend gleich zu der aus FIG 1 aufgebaut ist. Die nachfolgende Beschreibung beschränkt sich im Wesentlichen auf die Unterschiede zum Ausführungsbeispiel aus FIG 1, auf das bezüglich gleichbleibender Merkmale und Funktionen verwiesen wird. Um nicht bereits Beschriebenes mehrfach ausführen zu müssen, sind generell alle Merkmale eines vorangegangenen Ausführungsbeispiels im jeweils folgenden Ausführungsbeispiel übernommen, ohne dass sie erneut beschrieben sind, es sei denn, Merkmale sind als Unterschiede zu den vorangegangenen Ausführungsbeispielen beschrieben. Außerdem sind im Wesentlichen gleichbleibende Bauteile mit den gleichen Bezugszeichen beziffert. Zum einfachen Verständnis sind außerdem gleiche Bauteile in verschiedenen Ausführungsbeispielen mit den gleichen Bezugsziffern und anderen Bezugsbuchstaben bezeichnet, wobei sie identisch zueinander oder mit geringfügigen Unterschieden, zum Beispiel in Abmessung, Position und/oder Funktion, zueinander sein können.

Bei dem in FIG 2 dargestellten Ausführungsbeispiel ist die Seitenwand 42b in mehrere Abschnitte 54a, 54b, 54c aufgeteilt. Diese sind allesamt zumindest überwiegend über dem Hauptförderer 4a angeordnet, und hintereinander in Hauptförderrichtung 34 und quer zu dieser versetzt angeordnet. Der Winkel α₁ des Abschnitts 54a zur Hauptförderrichtung 34 beträgt 5°, der Winkel α₂ des Abschnitts 54b beträgt 7° und der Winkel α₃ des Abschnitts 54c zur Hauptförderrichtung 34 beträgt wieder 5°.

Mit dieser Anordnung kann einem Einklemmen von weichen Verpackungen, beispielsweise Folienverpackungen, in einem Spalt zwischen dem Förderelement 60a des Hauptförderers 4a und den Abschnitten 54a-c entgegengewirkt werden. Während bei der Seitenwand 42a in FIG 1 die Gefahr bestand, dass eine einklemmte Verpackung über die gesamt Länge der Seitenwand 42a unter dieser entlang gezogen und somit das entsprechende Packgut 22 immer tiefer in den Spalt hineingezogen wird, ist die Länge der Abschnitte 54a-c kürzer, sodass eine Mitschleppstrecke kürzer ist. Am Ende des entsprechenden Abschnitts 54a-c wird das eingeklemmte Packgut freigegeben und kann nun frei auf den nächsten stromabwärts liegenden Abschnitt 54a,b auftreffen.

Um die Gefahr des Einklemmens noch weiter zu verringern, ist außerdem jeweils ein Spalt 56a, 56b, 56c zwischen den Abschnitten 54a-c und dem Förderelement 60a stromabwärts vertikal aufweitend gestaltet. Dies ist im oberen Abschnitt der Abbildung aus FIG 2 schematisch dargestellt. Jeder der Abschnitte 54a-c hat zwischen sich und dem Förderelement 60a einen Spalt 56a-c, der sich stromabwärts in vertikaler Höhe weitet. Ein in diesem Spalt 56a-c eingeklemmtes Packgut 22 wird so bei einer Bewegung stromabwärts in Hauptförderrichtung 34 beziehungsweise in Richtung des entsprechenden Abschnitts 54a-c der Seitenwand 42b wieder freigegeben, beziehungsweise die Einklemmung bleibt so leicht, dass eine Beschädigung des Packguts 22 vermieden wird. Die Aufweitung beträgt beispielsweise zumindest das Doppelte, insbesondere zumindest das Dreifache der geringsten Höhe eines Spalts 56a-c.

Die unterschiedlichen Winkelstellungen der Abschnitte 54a-c zur Hauptförderrichtung 34 sind einerseits mit deren Länge begründet. Je länger ein Abschnitt 54a-c ist, desto geringer ist sein Winkel zur Hauptförderrichtung 34. Weiter ist der unterschiedliche Winkel durch den mittleren Packgutdruck gegen den entsprechenden Abschnitt 54a-c begründet. Je größer der Packgutdruck ist, desto geringer ist der Winkel zur Hauptförderrichtung 34. Während also der oberste Abschnitt 54c relativ lang und deshalb relativ flach angewinkelt ist, ist der mittlere Abschnitt 54b kürzer und entsprechend stärker angewinkelt. Der unterste Abschnitt 54a hingegen ist zwar wieder kurz, erfährt jedoch einen hohen Packgutdruck, weshalb sein Winkel geringer ist als beim stromaufwärts gelegenen Abschnitt 54b.

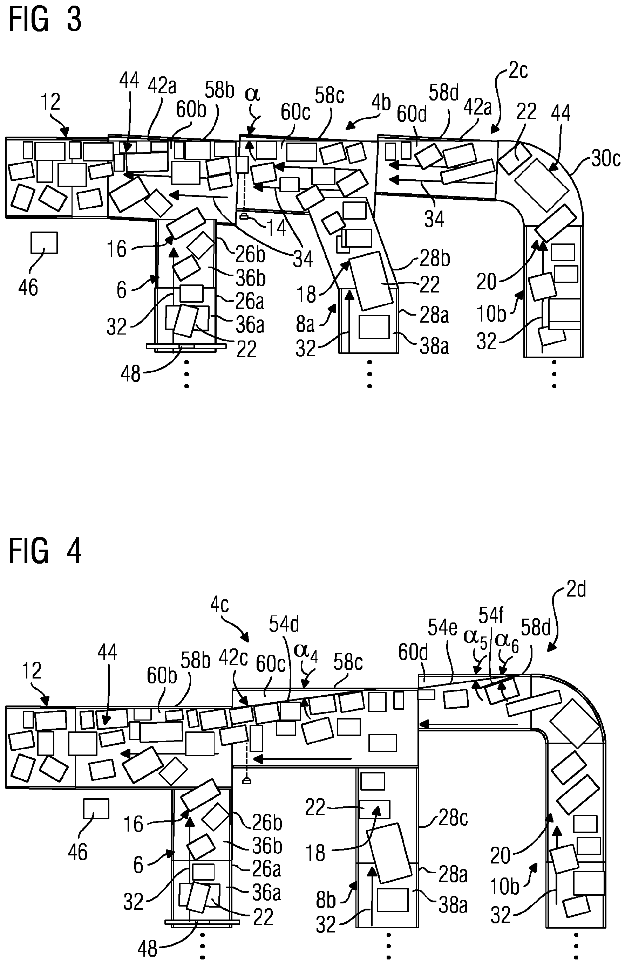

Bei dem in FIG 3 dargestellten Ausführungsbeispiel einer Packgutfördervorrichtung 2c ist deren Hauptförderer 4b in drei Abschnitte unterteilt mit je einer Fördereinheit 58b, 58c, 58d. Während also der Hauptförderer 4a nur eine einzige Fördereinheit 58a hat, umfasst der Hauptförderer 4b aus FIG 3 aus den drei Fördereinheiten 58b - 58d. Die übrigen Komponenten sind in Bezug auf das Ausführungsbeispiel aus FIG 1 gleich, wobei jedoch der oberste Zuführförderer 10b eine Fördereinheit 30c in Form eines 90° Kurvenförderers aufweist. Dieser ist direkt mit der obersten Fördereinheit 58d des Hauptförderers 4b verbunden.

Bei dem Ausführungsbeispiel aus FIG 3 ist die Seitenwand 42a wieder durchgehend und mit einem Winkel α = 3° zur Hauptförderrichtung 34 ausgerichtet. Es ist jedoch ebenso gut möglich, die Seitenwand 42a wie beispielsweise in FIG 2 auszuführen.

Die Fördereinheiten 58b-d sind seitlich versetzt zueinander angeordnet, wobei eine stromaufwärts gelegene Fördereinheit 58c,d einen an ihm unmittelbar stromabwärts angrenzende Fördereinheit 58b,c auf der Seite überragt, auf der die Seitenwand 42a am Hauptförderer 4b angeordnet ist. Auf der gegenüberliegenden Seite ist es umgekehrt: Hier überragt die jeweils stromabwärts liegende Fördereinheit 58b,c die stromaufwärts liegende Fördereinheit 58c,d seitlich.

Außerdem ist die Förderbreite einer stromabwärts gelegenen Fördereinheit 58b,c breiter als die Förderbreite der jeweils angrenzenden stromaufwärts liegenden Fördereinheit 58c,d. Auf diese Weise nimmt die insgesamte Breite der Förderelemente 60b-d von Fördereinheit zu Fördereinheit 58b-d stromabwärts zu. Durch die angewinkelte Seitenwand 42a nimmt die nutzbare Förderbreite jedoch auf jedem der Fördereinheiten 58b-c beziehungsweise Förderelemente 60b-d innerhalb der entsprechenden Einheit beziehungsweise des entsprechenden Elements in Richtung stromabwärts jedoch ab. Hierdurch kann eine gute Verdichtung des Packguts 22 in Richtung zur Seitenwand 42a sowie eine Ausrichtung des Packguts 22a in Richtung der Seitenwand 42a erreicht werden.

FIG 4 zeigt ein weiteres Ausführungsbeispiel einer Packgutfördervorrichtung 2d mit einem Hauptförderer 4d, die von ihrem Aufbau her gleich sind, wie bei der Packgutfördervorrichtung 2c aus FIG 3, bis auf den Zuführförderer 8b, der anstelle der Rutsche 28b eine Fördereinheit 28c aufweist mit einem Bandförderer, analog wie die Fördereinheit 26b. Außerdem ist der seitliche Versatz der Fördereinheiten 58b-d größer als bei dem Ausführungsbeispiel aus FIG 3, und auch die Seitenwand 42c ist nicht mehr durchgehend ausgeführt. Sie umfasst zwei zur Hauptförderrichtung 34 in einem spitzen Winkel angeordneten Abschnitte 54d, 54e, die stromaufwärts und/oder stromabwärts an einen Seitenwandabschnitt grenzen, der parallel zur Hauptförderrichtung 34 ausgerichtet ist. Die beiden Abschnitte 54d,e sind mit einem Winkel α₄ = 8° und α₅ = 8° zur Hauptförderrichtung 34 angewinkelt, wobei die beiden Winkel α₄, α₅ auch verschieden sein können.

Im Bereich der Einmündung der Fördereinheit 28c ist ein nicht zur Hauptförderrichtung 34 angewinkelter Seitenwandabschnitt angeordnet, sodass dort auf eine Verdichtung des Hauptstroms 44 verzichtet wird. Hierdurch kann ein Stau des Packguts 22 bei einem starken Packgutstrom 18 aus der Fördereinheit 28c vermieden werden. Das Gleiche gilt auch für die Mündung des Zuführförderers 6, wobei im Bereich der Fördereinheit 58b vollständig auf einen angewinkelten Seitenwandabschnitt verzichtet wurde, sodass eine Verdichtung des Hauptstroms 44 hierdurch nicht stattfindet. Dies kann durch den starken Versatz der Fördereinheiten 58b-d seitlich zueinander und durch die großen Winkel α₄ der Seitenwand 42c kompensiert werden, wodurch der Hauptstrom 44 bereits vor der Einmündung des Zuführförderers 6 ausreichend verdichtet ist.

An der Fördereinheit 58d ist beispielhaft ein weiterer Abschnitt 54f der Seitenwand 42c dargestellt. Dieser weist einen Winkel α₆ = 18° gegenüber der Hauptförderrichtung 34 auf. Außerdem ist dieser Abschnitt 54f gefedert schwenkbar gelagert, sodass er durch ein schweres Packgut 22 gegen den Abschnitt 54e gedrückt wird und somit dessen Winkel α₅ einnimmt. Hierdurch kann bei einer Staubildung eine größere Druckausübung auf das Packgut 22 gegenseitig vermieden werden, da bei einem solchen Druck der Abschnitt 54f nach außen schwenkt und eine größere Förderbreite frei gibt.

Der zusätzliche Abschnitt 54f hat den Vorteil, dass der Hauptstrom 44 in dessen Bereich stark verdichtet werden kann und das Risiko eines Staus durch die Schwenkbarkeit verringert wird und zweitens einem Einklemmen von Weichverpackungen unter der Seitenwand 42c entgegengewirkt wird. Denn durch den großen Winkel α₆ kann der Abschnitt 54f kurz gehalten werden, sodass eine Strecke, innerhalb der die Verpackung in dem Spalt eingeklemmt ist, kurz bleibt. Bei starken Klemmungen federt außerdem der Abschnitt 54f nach außen, sodass ein weiteres Einziehen des Packguts 22 beziehungsweise dessen Verpackung in den Spalt verhindert wird. Außerdem weitet sich der Spalt vertikal, wie zu den Spalten 56a-c zu FIG 2 erläutert ist. Hierdurch kann einer Klemmung entgegengewirkt und das dennoch unter den Abschnitt 54f geratene Packgut kann schnell wieder freigegeben werden.

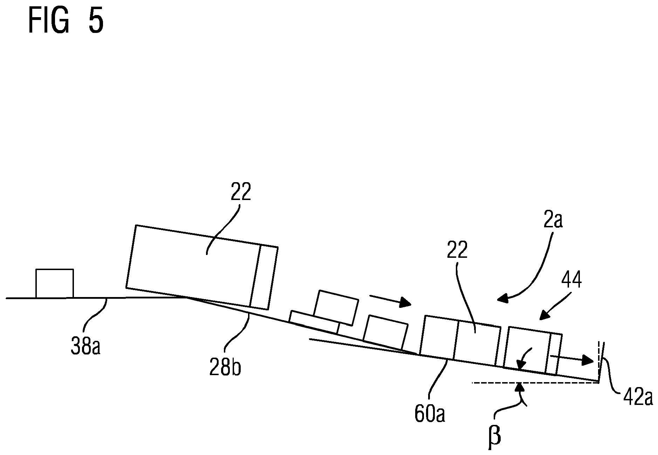

Anhand des Ausführungsbeispiels aus FIG 5 wird im Folgenden eine andere Möglichkeit zur Verdichtung des Hauptstroms 44 zur Seitenwand 42a hin beschrieben, die zusätzlich zu der zur Hauptförderrichtung 34 angewinkelten Seitenwand 42a oder auch ohne eine angewinkelte Seitenwand 42a verwendet werden kann.

FIG 5 zeigt in einer schematischen Art und Weise einen Schnitt durch die Packgutfördervorrichtung 2a aus FIG 1 entlang der strichpunktierten Linie V-V aus FIG 1. Schematisch gezeigt ist das Förderelement 38a des Zuführförderers 8a sowie dessen als Rutsche ausgeführte Fördereinheit 28b, die auf dem Förderelement 60a des Hauptförderers 4a mündet. Es ist zu sehen, dass das Förderelement 60a um den Winkel β = 10° zur Waagerechten geneigt ist und zwar zur Seitenwand 42a hin, die in FIG 5 durchgezogen dargestellt ist. Durch diese geneigte Ausrichtung des Hauptförderers 4a relativ zur Seitenwand 42a werden die Packgüter 22 des Hauptstroms 44 durch die Schwerkraft in Richtung zur Seitenwand 42a geführt. Sie rutschen über die glatte Oberfläche des Förderelements 60a zur Seitenwand 42a hin. Auch hierdurch kann eine Verdichtung des Hauptstroms 44 zur Seitenwand 42a und eine Ausrichtung der Packgüter 22 in Richtung der Seitenwand 42a erreicht werden.

Die Seitenwand 42a ist bei dem in FIG 5 gezeigten Ausführungsbeispiel senkrecht zur Ausrichtung des Förderelements 60a ausgerichtet, um dem meist quaderförmigen Packgut 22 eine gute Anlagefläche zu bieten. Es ist selbstverständlich auch möglich, die Seitenwand 42a senkrecht zur Horizontalen auszurichten, wie in FIG 5 durch die gestrichelte Linie dargestellt ist. Unabhängig von der Verkippung beziehungsweise Ausrichtung der Seitenwand 42a kann die als Neigung im Winkel β relativ zur Horizontalen ausgeführte Ausrichtung des Hauptförderers 4a relativ zur Seitenwand 42a alleine oder in Verbindung mit der zur Hauptförderrichtung 34 angewinkelten Seitenwand 42a die Verdichtung des Hauptstroms 44 bewirken. Diese Neigung kann bei allen zuvor beschriebenen Ausführungsbeispielen verwirklicht werden.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Ansprüche zu verlassen.

## Patentansprüche

1. Verfahren zum Zusammenführen von mehreren getrennten Packgutströmen (16, 18, 20) in einen Hauptstrom (44), bei dem jeder der Packgutströme (16, 18, 20) auf einem Zuführförderer (6, 8a, 8b, 10a, 10b) befördert, im Bereich einer Zuführmündung des Zuführförderers (6, 8a, 8b, 10a, 10b) mit dem Hauptstrom (44) vereint und auf einem Hauptförderer (4a, 4b, 4c) im Hauptstrom (44) weitertransportiert wird, wobei zumindest eine Seitenwand (42a, 42b) den Hauptstrom (44) seitlich begrenzt,
wobei Packgüter (22) des Hauptstroms (44) im Bereich zwischen zwei Zuführmündungen zweier Zuführförderer (6, 8a, 8b, 10a, 10b) aufgrund einer Ausrichtung des Hauptförderers (4a, 4b, 4c) relativ zur Seitenwand (42a, 42b, 42c) auf diese zu und dann an dieser entlang geführt werden,
**dadurch gekennzeichnet, dass** die Seitenwand (42a, 42b, 42c) zumindest teilweise über einem Förderelement (60a, 60b, 60c, 60d) des Hauptförderers (4a, 4b, 4c) angeordnet ist und einen Spalt (56a, 56b, 56c) zum Förderelement (60a, 60b, 60c, 60d) bildet, der sich stromabwärts vertikal vergrößert.

2. Verfahren nach Anspruch 1,
**dadurch gekennzeichnet, dass** der Hauptstrom (44) auf dem Hauptförderer (4a, 4b, 4c) in einer Hauptförderrichtung (34) bewegt wird, die angewinkelt zur Seitenwand (42a, 42b, 42c) ist, und die Packgüter (22) des Hauptstroms (44) durch die Bewegung in Hauptförderrichtung (34) auf die Seitenwand (42a, 42b, 42c) zu und dann an dieser entlang geführt werden.

3. Verfahren nach Anspruch 1 oder 2,
**dadurch gekennzeichnet, dass** die Seitenwand (42a, 42b) zwischen zwei Zuführmündungen von zwei der Zuführförderern (6, 8a, 8b, 10a, 10b) und relativ zum Hauptstrom gegenüber den Zuführmündungen angeordnet ist und die Packgüter von der Seitenwand (42a, 42b, 42c) in Richtung zur Zuführmündung des nächsten stromabwärts liegenden Zuführförderers (6, 8a, 8b, 10a, 10b) gedrückt werden.

4. Verfahren nach einem der vorhergehenden Ansprüche,
**dadurch gekennzeichnet, dass** als Packgüter Post- oder Kuriersendungen aus einer LKW-Entladestation auf ein Entladeteleskop geladen werden, das die Sendungen auf den Zuführförderer (6, 8a, 8b, 10a, 10b) fördert, das die Sendungen in den Hauptstrom speist.

5. Verfahren nach einem der vorhergehenden Ansprüche,
**dadurch gekennzeichnet, dass** die Seitenwand (42c) gefedert gelagert ist und durch ein anstoßendes Packgut verschwenkt wird, so dass ein Winkel α zwischen der Seitenwand und der Hauptförderrichtung verkleinert wird.

6. Verfahren nach Anspruch 5,
**dadurch gekennzeichnet, dass** die Seitenwand (42c) gegen einen Anschlag stößt und in dieser Position einen Winkel (α₆) zwischen 1° und 10° zur Hauptförderrichtung (34) einschließt.

7. Verfahren nach einem der vorhergehenden Ansprüche,
**dadurch gekennzeichnet, dass** zumindest einer der Zuführförderer (8a, 10a) ein in Stromrichtung schräg nach unten ausgerichteten Übergang aufweist, auf dem das Packgut (22) durch die Schwerkraft unterstützt in Richtung zum Hauptförderer (4a, 4b, 4c) bewegt wird und quer zur Hauptförderrichtung (34) auf dem Hauptförderer (4a, 4b, 4c) in Richtung zur Seitenwand (42a, 42b, 42c) rutscht.

8. Verfahren nach einem der vorhergehenden Ansprüche,
**dadurch gekennzeichnet, dass** ein am Hauptförderer (4a, 4b, 4c) angeordneten Belegungssensor (14) eine packgutfreie Strecke auf dem Hauptförderer (4a, 4b, 4c) misst und eine Steuereinheit (46) eine Zuführung eines Packgutstroms (16, 18) von einem Zuführförderer (6, 8a, 8b) auf den Hauptförderer (4a, 4b, 4c) in Abhängigkeit einer von der Strecke abgeleiteten Größe steuert.

9. Verfahren nach einem der vorhergehenden Ansprüche,
**dadurch gekennzeichnet, dass** der Hauptförderer (4a) eine Fördereinheit (58a) mit einem sich in Hauptförderrichtung (34) bewegenden Förderelement (60a) aufweist, auf dem die Packgüter (22) transportiert werden, und die Ausrichtung des Hauptförderers (4a) derart ist, dass das Förderelement (60a) zur Seitenwand (42a) hin in einem Neigungswinkel > 3° zur Waagerechten geneigt ist, und Packgüter (22) auf dem Förderelement (60a) durch die Schwerkraft getrieben zur Seitenwand (42a) hin rutschen.

10. Packgutfördervorrichtung (2a, 2b, 2c) zum Zusammenführen von mehreren getrennten Packgutströmen (16, 18, 20) in einen Hauptstrom (44), mit einem Hauptförderer (4a, 4b, 4c), der ein Förderelement (60a, 60b, 60c, 60d) zum Transportieren von Packgut (22) in einer Hauptförderrichtung (34) und zumindest eine Seitenwand (42a, 42b, 42c) aufweist, die den Hauptstrom (44) seitlich begrenzt, und mit mehreren Zuführförderern (6, 8a, 8b, 10a, 10b), die jeweils ein Förderelement (36a, 36b, 38a, 40a) zum Fördern des entsprechenden Packgutstroms (16, 18, 20) in eine Zuführrichtung (32) aufweisen,
wobei der Hauptförderer (4a, 4b, 4c) in der Weise relativ zur Seitenwand (42a, 42b, 42c) angeordnet ist, dass Packgüter (22) des Hauptstroms (44) aufgrund der Ausrichtung des Hauptförderers (4a, 4b, 4c) relativ zur Seitenwand (42a, 42b, 42c) auf diese zu geführt werden,
**dadurch gekennzeichnet, dass** die Seitenwand (42a, 42b, 42c) zumindest teilweise über einem Förderelement (60a, 60b, 60c, 60d) des Hauptförderers (4a, 4b, 4c) angeordnet ist und einen Spalt (56a, 56b, 56c) zum Förderelement (60a, 60b, 60c, 60d) bildet, der sich stromabwärts vertikal vergrößert.

11. Packgutfördervorrichtung (2a, 2b, 2c) nach Anspruch 10, **dadurch gekennzeichnet, dass** der Hauptförderer (4a, 4b, 4c) so ausgerichtet ist, dass die Seitenwand (42a, 42b, 42c) in einem Winkel (α, α₁, α₂, α₃, α₄, α₅, α₆,) zwischen 1° und 20° zur Hauptförderrichtung (34) steht und eine Förderbreite des Förderelements (60a, 60b, 60c, 60d) des Hauptförderers (4a, 4b, 4c) in Hauptförderrichtung (34) verengt.

12. Packgutfördervorrichtung (2a, 2b, 2c) nach Anspruch 10 oder 11,
**dadurch gekennzeichnet, dass** der Hauptförderer (4a, 4b, 4c) zumindest zwei Fördereinheiten (58b, 58c, 58d) aufweist, die quer zur Hauptförderrichtung (34) versetzt zueinander angeordnet sind.

13. Packgutfördervorrichtung (2a, 2b, 2c) nach einem der Ansprüche 10 bis 12,
**dadurch gekennzeichnet, dass** der Hauptförderer (4a, 4b, 4c) zumindest zwei Fördereinheiten (58b, 58c, 58d) aufweist, und die in Hauptförderrichtung (34) stromabwärts angeordnete Fördereinheit (58b, 58c) breiter ist als die stromaufwärts gelegene Fördereinheit (58c, 58d).

14. Packgutfördervorrichtung (2a, 2b, 2c) nach einem der Ansprüche 10 bis 13,
**gekennzeichnet durch** einen am Hauptförderer (4a, 4b, 4c) angeordneten Belegungssensor (14), der zur Ausmessung einer packgutfreier Strecke vorbereitet ist.

## Claims

1. Method of bringing together a plurality of separate streams of packaged goods (16, 18, 20) into a main stream (44), in which each of the streams of packaged goods (16, 18, 20) is conveyed on a feed conveyor (6, 8a, 8b, 10a, 10b) with the main stream (44) (6, 8a, 8b, 10a, 10b), is combined with the main stream (44) in the region of a feed mouth of the feed conveyor (6, 8a, 8b, 10a, 10b) and is conveyed further on a main conveyor (4a, 4b, 4c) in the main stream (44) transported further in the main stream (44), wherein at least a side wall (42a, 42b) laterally bounds the main stream (44),
wherein packaged goods (22) of the main flow (44) are conveyed in the region between two feed openings of two feed conveyors (6, 8a, 8b, 10a, 10b) due to an orientation of the main conveyor (4a, 4b, 15 4c) relative to the side wall (42a, 42b, 42c) towards the latter and then along the latter then along it, **characterised in that** the side wall (42a, 42b, 42c) is at least partially over a conveyor element (60a, 60b, 60c, 60d) of the main conveyor (4a, 4b, 4c) and forms a gap (56a, 56b, 56c) to the conveying element (60a, 60b, 60c, 60d), which gap extends, which increases vertically downstream.

2. Method according to claim 1, **characterised in that** the main stream (44) is conveyed on the main conveyor (4a, 4b, 4c) in a main conveying direction (34) that is angled to the side wall (42a, 42b, 42c) and the packaged goods (22) are (42a, 42b, 42c), and the packaged goods (22) of the main stream (44) are conveyed by the main conveying direction (34) towards the side wall (42a, 42b, 42c) and then guided along it.

3. Method according to claim 1 or 2,
**characterised in that** the side wall (42a, 42b) is guided between two feed mouths of two of the feed conveyors (6, 8a, 8b, 10a, 10b) and is arranged relative to the main flow opposite the feed openings and the packaged goods are conveyed from the side wall (42a, 42b, 42c) in the direction of the feed opening of the next downstream feed conveyor (6, 8a, 8b, 10a, 10b).
next downstream feed conveyor (6, 8a, 8b,
10a, 10b) downstream.

4. Method according to one of the preceding claims, **characterised in that** mail or courier consignments are loaded as packaged goods from a lorry unloading station onto an unloading tel5 scope, which loads the consignments onto the fee conveyor (6, 8a, 8b, 10a, 10b) which feeds the items into the main stream.

5. Method according to any one of the preceding claims, **characterised in that** the sidewall (42c) is spring-mounted and is spring-mounted and pivoted by an abutting packaged item so that an angle a between the side wall and the main direction of main conveying direction is reduced.

6. Method according to claim 5,
**characterised in that** the side wall (42c) abuts against a stop and is and in this position forms an angle (α₆) of between 1° and 10° to the main conveying direction (34).

7. Method according to one of the preceding claims,
**characterised in that** at least one of the feed conveyors (8a, 10a) has a transition directed obliquely downwards in the direction of flow, on which the packaged product (22) is conveyed, supported by gravity, in the direction of the main conveying direction (34). supported by gravity in the direction of the main conveyor (4a, 4b, 4c) and is moved transversely to the main conveying direction (34) on the main conveyor (4a, 4b, 4c) towards the side wall (42a, 42b, 42c).

8. Method according to any of the preceding claims,
**characterized in that** an occupancy sensor arranged on the main conveyor (4a, 4b, 4c) measures a distance free of packaged goods on the main conveyor (4a, 4b, 4c) and a control unit (46) controls a supply of a stream of packaged goods (16, 18) from a supply conveyor (6, 6b, 6c).a feed conveyor (6, 8a, 8b) onto the main conveyor (4a, 35 4b, 4c) as a function of a variable derived from the distance. derived from the distance.

9. Method according to any one of the preceding claims,
**characterized in that** the main conveyor (4a) comprises a conveyor unit (58a) with a conveyor element (60a) moving in the main conveying direction (34), on which the packets (22) are transported, and the orientation of the main conveyor (4a) is such that the conveying element (60a) is inclined towards the side wall (42a) at an angle of inclination > 3° to the horizontal, and packaged goods (22) are transported on the conveyor element (60a) through the (60a) slide on the conveying element (60a) towards the side wall (42a) on the conveying element (60a).

10. Packaged goods conveying device (2a, 2b, 2c) for bringing together of several separate streams of packaged goods (16, 18, 20) into one main stream (44), with a main conveyor (4a, 4b, 4c) which has a conveyor element (60a, 60b, 60c, 60d) for conveying goods (22) in a main conveying direction (34), and at least one a side wall (42a, 42b, 42c) which laterally delimits the main flow (44), and (44), and with several feed conveyors (6,8a, 8b, 10a, 10b), each having a conveying element (36a, 36b, 38a, 40a) for conveying the corresponding stream of packaged goods (16,18, 20) in a feed direction (32), wherein the main conveyor (4a, 4b, 4c) is arranged in such a way relative to the side wall (42a, 42b, 42c) in such a way that packaged goods (22) of the (22) of the main flow (44) are guided towards the side wall (42a, 42b, 42c) due to the orientation of the main conveyor (4a, 4b, 4c) relative to the side wall (42a, 42b, 42c), and towards the side wall (42a, 42b, 42c), **characterised in that** the sidewall (42a, 42b, 42c) is at least partially over a conveyor element (60a, 60b, 60c, 60d) of the main conveyor (4a, 4b, 4c) and forms a 30 gap (56a, 56b, 56c) to the conveying element (60a, 60b, 60c, 60d) which extends downstream which increases vertically downstream.

11. Packaged goods conveyor device (2a, 2b, 2c) according to claim 10, **characterised in that** the main conveyor (4a, 4b, 4c),35 is oriented such that the side wall (42a, 42b, 42c) is at an angle (α, α₁, α₂, α₃, α₄, α₅, α₆,) of between 1° and 20° to the main conveying direction (34) and a conveying width of the convey- element (60a, 60b, 60c, 60d) of the main conveyor (4a, 4b, 4c) narrows in the main conveying direction (34).

12. Packaged goods conveyor device (2a, 2b, 2c) according to claim 10 5 or 11, **characterised in that** the main conveyor (4a, 4b, 4c) has at least two conveying units (58b, 58c, 58d), which are arranged offset from one another transversely to the main conveying direction (34).

13. Packaged goods conveyor device (2a, 2b, 2c) according to one of claims 10 to 12, **characterized in that** the main conveyor (4a, 4b, 4c) comprises has at least two conveyor units (58b, 58c, 58d), and 15 the downstream conveyor unit (58b, 58c) in the main conveying direction (34) is wider than the upstream conveyor unit (58c, 58d).

14. Packaged goods conveyor device (2a, 2b, 2c) according to one of the claims 10 to 13, **characterised by** an occupancy sensor (14) which is arranged on the main conveyor (4a, 4b, 4c) and which is prepared for the measurement of an distance free of packaged goods.

## Revendications

1. Procédé pour réunir plusieurs flux de produits emballés séparés (16, 18, 20) en un flux principal (44), dans lequel chacun des flux de produits emballés (16, 18, 20) est convoyé sur un convoyeur d'alimentation (6, 8a, 8b, 10a, 10b), est réuni avec le flux principal (44) dans la zone d'une embouchure d'alimentation du convoyeur d'alimentation (6, 8a, 8b, 10a, 10b), et continue d'être transporté dans le flux principal (44) sur un convoyeur principal (4a, 4b, 4c), au moins une paroi latérale (42a, 42b) limitant latéralement le flux principal (44),
dans lequel
dans la zone située entre deux embouchures d'alimentation de deux convoyeurs d'alimentation (6, 8a, 8b, 10a, 10b), les produits emballés (22) du flux principal (44) sont guidés vers la paroi latérale (42a, 42b, 42c), puis le long de celle-ci, en raison d'une orientation du convoyeur principal (4a, 4b, 4c) par rapport à ladite paroi,
**caractérisé en ce que** la paroi latérale (42a, 42b, 42c) est disposée au moins partiellement au-dessus d'un élément de convoyage (60a, 60b, 60c, 60d) du convoyeur principal (4a, 4b, 4c) et forme un interstice (56a, 56b, 56c) par rapport à l'élément de convoyage (60a, 60b, 60c, 60d), qui s'agrandit verticalement vers l'aval.

2. Procédé selon la revendication 1,
**caractérisé en ce que** le flux principal (44) est déplacé sur le convoyeur principal (4a, 4b, 4c) dans une direction de convoyage principale (34) qui est inclinée par rapport à la paroi latérale (42a, 42b, 42c), et les produits emballés (22) du flux principal (44) sont guidés vers la paroi latérale (42a, 42b, 42c), puis le long de celle-ci, par le mouvement dans la direction de convoyage principale (34).

3. Procédé selon la revendication 1 ou 2,
**caractérisé en ce que** la paroi latérale (42a, 42b) est disposée entre deux embouchures d'alimentation de deux des convoyeurs d'alimentation (6, 8a, 8b, 10a, 10b) et à l'opposé des embouchures d'alimentation par rapport au flux principal, et les produits emballés sont poussés par la paroi latérale (42a, 42b, 42c) en direction de l'embouchure d'alimentation du convoyeur d'alimentation suivant (6, 8a, 8b, 10a, 10b) situé en aval.

4. Procédé selon l'une des revendications précédentes,
**caractérisé en ce que** les produits emballés sont des envois postaux ou des courriers provenant d'un poste de déchargement de camions et sont chargés sur un télescope de déchargement qui transporte les envois sur le convoyeur d'alimentation (6, 8a, 8b, 10a, 10b) qui introduit les envois dans le flux principal.

5. Procédé selon l'une des revendications précédentes,
**caractérisé en ce que** la paroi latérale (42c) est montée sur ressorts et est pivotée par un produit emballé qui la heurte, de sorte qu'un angle α entre la paroi latérale et la direction de convoyage principale est réduit.

6. Procédé selon la revendication 5,
**caractérisé en ce que** la paroi latérale (42c) vient buter contre une butée et forme dans cette position un angle (α₆) compris entre 1° et 10° par rapport à la direction de convoyage principale (34).

7. Procédé selon l'une des revendications précédentes,
**caractérisé en ce qu'**au moins l'un des convoyeurs d'alimentation (8a, 10a) présente une transition orientée en oblique vers le bas dans le sens du flux, au niveau de laquelle les produits emballés (22) sont déplacés en direction du convoyeur principal (4a, 4b, 4c) en étant soutenus par la force de gravité et glissent en direction de la paroi latérale (42a, 42b, 42c) transversalement à la direction de convoyage principale (4a, 4b, 4c), sur le convoyeur principal (4a, 4b, 4c).

8. Procédé selon l'une des revendications précédentes,
**caractérisé en ce qu'**un capteur d'occupation (14) disposé sur le convoyeur principal (4a, 4b, 4c) mesure un trajet exempt de produits emballés sur le convoyeur principal (4a, 4b, 4c), et une unité de commande (46) contrôle l'amenée d'un flux de produits emballés (16, 18) d'un convoyeur d'alimentation (6, 8a, 8b) au convoyeur principal (4a, 4b, 4c) en fonction d'une grandeur dérivée du trajet.

9. Procédé selon l'une des revendications précédentes,
**caractérisé en ce que** le convoyeur principal (4a) comporte une unité de convoyage (58a) comprenant un élément de convoyage (60a) se déplaçant dans la direction de convoyage principale (34) et sur lequel les produits emballés (22) sont transportés, et l'orientation du convoyeur principal (4a) est telle que l'élément de convoyage (60a) est incliné vers la paroi latérale (42a) selon un angle d'inclinaison > 3° par rapport à l'horizontale, et les produits emballés (22) sur l'élément de convoyage (60a) glissent vers la paroi latérale (42a) sous l'effet de la gravité.

10. Dispositif (2a, 2b, 2c) de convoyage de produits emballés pour réunir plusieurs flux de produits emballés séparés (16, 18, 20) en un flux principal (44), comprenant un convoyeur principal (4a, 4b, 4c) qui comprend un élément de convoyage (60a, 60b, 60c, 60d) pour transporter les produits emballés (22) dans une direction de convoyage principale (34), et au moins une paroi latérale (42a, 42b, 42c) qui limite latéralement le flux principal (44), et comprenant plusieurs convoyeurs d'alimentation (6, 8a, 8b, 10a, 10b) qui présentent chacun un élément de convoyage (36a, 36b, 38a, 40a) pour transporter le flux de produits emballés correspondant (16, 18, 20) dans une direction d'alimentation (32),
dans lequel le convoyeur principal (4a, 4b, 4c) est disposé par rapport à la paroi latérale (42a, 42b, 42c) de telle sorte que les produits emballés (22) du flux principal (44) sont guidés vers la paroi latérale (42a, 42b, 42c) en raison de l'orientation du convoyeur principal (4a, 4b, 4c) par rapport à celle-ci,
**caractérisé en ce que** la paroi latérale (42a, 42b, 42c) est disposée au moins partiellement au-dessus d'un élément de convoyage (60a, 60b, 60c, 60d) du convoyeur principal (4a, 4b, 4c) et forme un interstice (56a, 56b, 56c) par rapport à l'élément de convoyage (60a, 60b, 60c, 60d), lequel s'agrandit verticalement vers l'aval.

11. Dispositif (2a, 2b, 2c) de convoyage de produits emballés selon la revendication 10,
**caractérisé en ce que** le convoyeur principal (4a, 4b, 4c) est orienté de telle sorte que la paroi latérale (42a, 42b, 42c) forme un angle (α, α₁, α₂, α₃, α₄, α₅, α₆) compris entre 1° et 20° par rapport à la direction de convoyage principale (34) et rétrécit une largeur de transport de l'élément de convoyage (60a, 60b, 60c, 60d) du convoyeur principal (4a, 4b, 4c) dans la direction de convoyage principale (34).

12. Dispositif (2a, 2b, 2c) de convoyage de produits emballés selon la revendication 10 ou 11,
**caractérisé en ce que** le convoyeur principal (4a, 4b, 4c) comprend au moins deux unités de convoyage (58b, 58c, 58d) qui sont disposées de manière décalée l'une par rapport à l'autre transversalement à la direction de convoyage principale (34).

13. Dispositif (2a, 2b, 2c) de convoyage de produits emballés selon l'une des revendications 10 à 12,
**caractérisé en ce que** le convoyeur principal (4a, 4b, 4c) comprend au moins deux unités de convoyage (58b, 58c, 58d), et l'unité de convoyage (58b, 58c) située en aval dans la direction de convoyage principale (34) est plus large que l'unité de convoyage (58c, 58d) située en amont.

14. Dispositif (2a, 2b, 2c) de convoyage de produits emballés selon l'une des revendications 10 à 13,
**caractérisé par** un capteur d'occupation (14) disposé sur le convoyeur principal (4a, 4b, 4c), qui est préparé pour mesurer un trajet exempt de produits emballés.
